(19) **Europäisches Patentamt / European Patent Office / Office européen des brevets**

(11) **EP 3 835 680 B1**

(12) **FASCICULE DE BREVET EUROPEEN**

(45) Date de publication et mention
de la délivrance du brevet:
**03.08.2022 Bulletin 2022/31**

(21) Numéro de dépôt: **20213241.1**

(22) Date de dépôt: **10.12.2020**

(51) Classification Internationale des Brevets (IPC):
**F24F 11/00** *(2018.01)* **F24F 110/20** *(2018.01)*
**F24F 110/50** *(2018.01)* **F24F 110/70** *(2018.01)*
**F24F 120/10** *(2018.01)* **F24F 130/40** *(2018.01)*

(52) Classification Coopérative des Brevets (CPC):
**F24F 11/0001;** F24F 2011/0002; F24F 2110/20;
F24F 2110/50; F24F 2110/70; F24F 2120/10;
F24F 2130/40; Y02B 30/70

(54) **SYSTÈME PILOTANT UN DISPOSITIF DE RENOUVELLEMENT D'AIR D'UNE ZONE ET DISPOSITIF DE CHAUFFAGE DE LA ZONE**

SYSTEM ZUR STEUERUNG EINER LUFTERNEUERUNGSVORRICHTUNG FÜR EINE ZONE UND EINER HEIZVORRICHTUNG FÜR DIE ZONE

SYSTEM CONTROLLING AN AIR EXCHANGE DEVICE FOR A ZONE AND A HEATING DEVICE FOR THE ZONE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.12.2019 FR 1914091**

(43) Date de publication de la demande:
**16.06.2021 Bulletin 2021/24**

(73) Titulaire: **Electricité de France
75008 Paris (FR)**

(72) Inventeurs:
• **MILU, Anamaria
77190 Dammarie-les-Lys (FR)**
• **GASTIGER, Frédéric
77210 Avon (FR)**

(74) Mandataire: **Regimbeau
20, rue de Chazelles
75847 Paris Cedex 17 (FR)**

(56) Documents cités:
EP-A1- 3 483 516  WO-A1-2013/107461
WO-A1-2016/005512  US-A1- 2018 106 490
US-A1- 2018 372 352  US-B1- 10 001 288

**Description**

**DOMAINE DE L'INVENTION**

La présente invention concerne un système pilotant un dispositif de renouvellement d'air d'une zone et un dispositif de chauffage de la zone.

**ETAT DE LA TECHNIQUE**

Il a été proposé des thermostats connectés pilotant des dispositifs de chauffage pour atteindre une température de consigne demandée. Parfois, une anticipation de chauffe est faite pour garantir la température demandée à l'heure demandée si la température de chauffage avait été préalablement modifiée.

Il a par ailleurs été proposé des dispositifs de renouvellement d'air fonctionnant soit en régime fixe (vitesse/débit fixe) soit en régime variable/modulable en fonction d'un taux d'humidité.

En outre, un dispositif de chauffage et un dispositif de renouvellement d'air peuvent être utilisés pour respectivement chauffer et renouveler de l'air dans une zone commune.

WO 2013/107461 A1 divulgue un système comprenant un dispositif de renouvellement d'air d'une zone, un dispositif de chauffage de la zone, un dispositif d'estimation de présence et un dispositif de contrôle configuré pour piloter le dispositif de renouvellement d'air et le dispositif de chauffage en fonction de l'estimation mise en ouvre par le dispositif d'estimation de présence.

EP3 483 516 A1 divulgue un système de contrôle alternatif configuré pour éviter le changement d'état du système de ventilation causé par une courte période d'absence/ présence.

**EXPOSE DE L'INVENTION**

Un but de l'invention est de piloter plus simplement et de manière plus optimale le chauffage et le renouvellement d'air d'une zone donnée.

Il est à cet effet proposé, selon un premier aspect, un système conforme à la revendication 1.

Le fait de piloter le dispositif de chauffage et le dispositif de renouvellement d'air en fonction de la présence des occupants a notamment pour avantages de permettre de réaliser des économies d'énergie et d'améliorer le confort des occupants.

Par ailleurs, les étapes conduisant à la séquence modifiée permettent de supprimer dans la séquence initiale des périodes d'absence et des périodes de présence de courte durée. Ceci permet de limiter avantageusement la fréquence des changements d'état du dispositif de renouvellement d'air ou de chauffage.

Le système selon le premier aspect peut également comprendre les caractéristiques optionnelles suivantes, prises seules ou combinées entre elles lorsque cela est techniquement possible.

De préférence, le système comprend un capteur de qualité d'air configuré pour mesurer une qualité d'air dans la zone, et le dispositif d'estimation de présence est configuré pour estimer si un individu est présent ou non dans la zone en fonction de la qualité d'air mesurée.

De préférence, l'estimation de présence/d'absence comprend les étapes suivantes mises en œuvre pour un instant de référence :

- comparaison entre la valeur d'une qualité d'air mesurée par le capteur à l'instant de référence et un seuil de valeur, et/ou comparaison entre un taux d'accroissement de la qualité d'air mesurée par le capteur à l'instant de référence et un seuil d'accroissement,
- génération d'un résultat associé à l'instant de référence, indiquant si un individu est présent ou absent dans la zone à l'instant de référence en fonction de chaque comparaison mise en œuvre.

De préférence, l'estimation est répétée dans le temps, et le dispositif de contrôle est configuré pour :

- activer le dispositif de chauffage ou augmenter un régime de chauffage du dispositif de chauffage, à condition : que chaque qualité d'air mesurée au cours d'une période de durée prédéfinie ait une valeur supérieure au seuil de valeur, et/ou que chaque taux d'accroissement comparé au cours de ladite période soit supérieur au seuil de valeur, et/ou
- désactiver le dispositif de chauffage ou réduire le régime de chauffage du dispositif de chauffage, à condition : que chaque qualité d'air mesurée au cours d'une période de durée prédéfinie ait une valeur inférieure au seuil de valeur, et/ou que chaque taux d'accroissement comparé au cours de ladite période soit inférieur au seuil de valeur.

De préférence, le capteur de qualité d'air est configuré pour mesurer un taux de $CO_2$, en COV, en particules PM 2.5 et/ou en particules PM 10.

De préférence, le dispositif d'estimation de présence est configuré pour répéter ladite estimation dans le temps et pour générer un planning de présence et d'absence d'individu dans la zone sur une période de temps, sur la base desdites estimations répétées, et le dispositif de contrôle est configuré pour piloter le dispositif de renouvellement d'air et le dispositif de chauffage en fonction du planning généré.

De préférence, le système comprend un capteur d'humidité configuré pour mesurer une humidité, et le dispositif de contrôle est configuré pour piloter le dispositif de renouvellement d'air en fonction de l'humidité mesurée.

De préférence, le système comprend :

- un capteur de qualité d'air interne configuré pour mesurer une qualité d'air dans la zone,
- un capteur de qualité d'air externe configuré pour mesurer une qualité d'air à l'extérieur de la zone,

et le dispositif de contrôle est configuré pour piloter le dispositif de renouvellement d'air en fonction d'un écart entre les qualités d'air respectivement mesurées par les capteurs de qualité d'air interne et externe.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

[Fig. 1] La figure 1 illustre de façon schématique un système selon un mode de réalisation.

[Fig. 2] La figure 2 est un organigramme d'étapes d'un procédé selon un mode de réalisation.

Sur l'ensemble des figures, les éléments similaires portent des références identiques.

## DESCRIPTION DETAILLEE DE L'INVENTION

### 1) Système

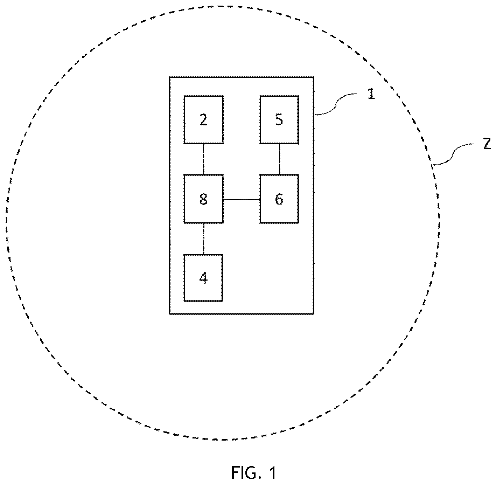

En référence à la **figure 1,** un système 1 comprend un dispositif de renouvellement d'air 2, un dispositif de chauffage 4, un dispositif d'estimation de présence 6 et un dispositif de contrôle 8.

Le dispositif de renouvellement d'air 2 a pour fonction renouveler de l'air se trouvant dans une zone Z prédéfinie. La zone Z prédéfinie est par exemple une zone Z se trouvant à l'intérieur d'un bâtiment, par exemple un logement ou une partie d'un logement.

Le dispositif de renouvellement d'air 2 est configurable dans un état désactivé et dans un état activé. Dans l'état désactivé, le dispositif de renouvellement d'air 2 ne renouvelle pas l'air de la zone Z. Cet état désactivé est typiquement un état hors tension ou un état de veille. Dans l'état activé, le dispositif de renouvellement d'air 2 traite l'air de la zone Z, et peut alors être bruyant. Il est par ailleurs possible de faire varier le régime de fonctionnement du dispositif de renouvellement d'air 2 dans l'état activé.

Le dispositif de renouvellement d'air 2 est par exemple est une VMC (Ventilation mécanique contrôlée). La VMC force un renouvellement de l'air intérieur d'un logement par la mise en marche d'un système de ventilation : l'air est insufflé via des bouches d'aération dans les pièces dites sèches (séjour, chambres) et extrait dans les pièces humides (salle de bains, WC, cuisine).

Le dispositif de chauffage est configuré pour chauffer la zone Z. Il comprend par exemple :

- au moins un radiateur,
- au moins une chaudière,
- au moins un convecteur, et/ou
- au moins une pompe à chaleur.

Le dispositif de chauffage peut notamment être paramétré avec une température de consigne Tcons à atteindre dans la zone.

Le dispositif d'estimation de présence 6 a pour fonction d'estimer si un individu se trouve ou non dans la zone Z. Pour mettre en œuvre cette estimation, le dispositif d'estimation se fonde sur des données fournies par un dispositif de mesure 5.

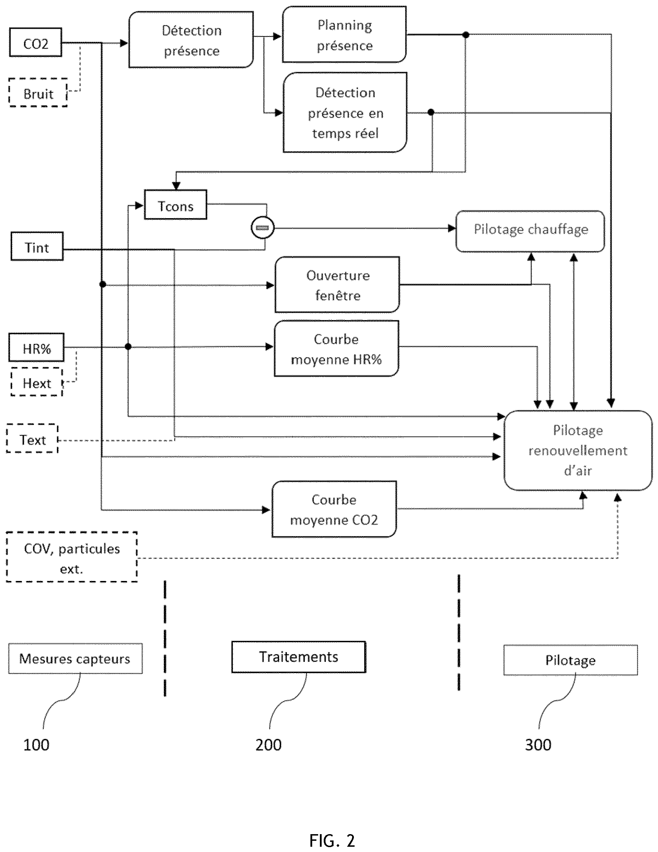

De manière générale, le dispositif de mesure 5 comprend au moins un des capteurs suivants (comme cela est indiqué sur la partie gauche de la figure 2) :

- un capteur de qualité d'air dans la zone Z,
- un capteur de qualité d'air à l'extérieur de la zone Z,
- un capteur d'humidité dans la zone Z, par exemple sous la forme d'une humidité relative HR en pourcents,
- un capteur d'humidité Hext à l'extérieur de la zone Z,
- un capteur de bruit acoustique dans la zone, (plus simplement appelé « bruit » dans la suite) ;
- un capteur de température Tint dans la zone Z,
- un capteur de température Text à l'extérieure de la zone Z.

En particulier, les capteurs de qualité d'air utilisés sont configurés pour mesurer au moins une des variables suivantes :

- un taux de $CO_2$,
- un taux de composés organiques volatils (COV),
- un taux en particules PM2.5 ou PM10.

Les capteurs du dispositif de mesure 5 se trouvant dans la zone Z peuvent être placés dans différentes parties de cette zone Z, par exemple différentes pièces dans un bâtiment.

Le dispositif d'estimation de présence 6 peut se présenter sous la forme d'un boîtier susceptible d'être placé dans la zone Z où se trouve également le dispositif de renouvellement d'air 2 et/ou le dispositif de chauffage 4, comme cela est représenté schématiquement sur la figure 1. En variante, le dispositif d'estimation de présence 6 comprend un dispositif de collecte pour collecter les données précitées, et un serveur configuré pour recevoir les données collectées par le dispositif de collecte, et décider s'il y a présence d'individu ou non dans la zone Z en fonction des données qu'il a reçues. Le dispositif de collecte et le serveur communiquent typiquement par radio. Ils peuvent être tous les deux connectés au réseau local déjà évoqué plus haut. Dans une autre variante, le serveur est un serveur distant, hors de la zone Z, accessible via le réseau Internet.

Le dispositif d'estimation comprend typiquement un processeur configuré pour traiter les données collectées et générer sur leur base une donnée de sortie indicative de l'estimation réalisée (absence ou présence d'individu dans la zone Z).

Le dispositif de contrôle 8 a pour fonction de piloter le dispositif de renouvellement d'air 2 et le dispositif de chauffage sur la base de l'estimation conduite par le dispositif d'estimation de présence 6, cette estimation étant elle-même réalisée sur la base des données fournies par le dispositif de mesure 5. A titre de pilotage, le dispositif de contrôle est notamment capable d'activer, de désactiver, et de moduler les régimes de fonctionnement respectifs des dispositifs 2 et 4.

En référence à l'organigramme de la figure 2, un procédé mis en œuvre par le système 1 suivant comprend globalement trois phases : une phase de mesure 100 mise en œuvre par le dispositif de mesure 5, une phase de traitement 200 des mesures, notamment mise en œuvre par le dispositif d'estimation 6, et une phase de pilotage 300 des dispositifs de renouvellement d'air 2 et de chauffage 4 mise en œuvre par le dispositif de contrôle 8.

## 2) Traitement des données mesurées

Dans ce qui suit il est décrit les traitements mis en œuvre par le système 1 au cours de la phase de traitement 200.

L'estimation de présence/absence mise en œuvre par le dispositif d'estimation 6 peut se faire en temps réel ou *a posteriori* une fois qu'il dispose d'assez de données mesurées.

L'identification de plages de présence/absence est plus précise si l'analyse des données se fait *a posteriori*. Cette approche est utilisée pour apprendre un planning d'absence/présence des occupants de la zone Z. La régulation du dispositif de chauffage 4 et du dispositif de renouvellement d'air 2 par le dispositif de contrôle 8 se fait en fonction de ce planning. En parallèle, une détection de la présence/absence d'individu dans la zone Z est faite en temps réel ; si le dispositif d'estimation 6 détecte que le planning de présence n'est pas respecté alors le régime de fonctionnement d'au moins un parmi le dispositif de renouvellement d'air 2 et le dispositif de chauffage 4 peut être adapté à la situation identifiée.

Si un utilisateur a demandé une réduction de la température de chauffage en absence et si le planning de présence/absence identifié *a posteriori* indique qu'il y a absence dans une plage temporelle, par exemple entre 10h et 16h, alors le dispositif de contrôle peut baisser voire arrêter le fonctionnement du dispositif de chauffage 4 à partir de 10h pour respecter la nouvelle température de consigne. A la fin de la plage considérée (ou avant si on fait une anticipation de chauffe), le régime de fonctionnement du dispositif de chauffage 4 peut être augmenté pour respecter la température de consigne correspondant à une période de présence, si elle est supérieure à une température de consigne correspondant à une période d'absence.

Si par exemple il est identifié une présence au cours de ladite plage avec l'algorithme en temps réel, alors le dispositif de contrôle 8 peut augmenter le régime de fonctionnement du dispositif de chauffage 4 pour respecter la température de consigne correspondant à une période de présence (si elle est supérieure à une température de consigne correspondant à une période d'absence) sans attendre la fin de la plage d'absence. Ce régime peut éventuellement être baissé si la température de consigne Tcons en cas de présence d'occupants dans la zone est plus basse que la température de consigne paramétrée en cas d'absence d'occupants.

La logique de l'algorithme de détection de présence en temps réel permet la détection de la présence seulement après un délai prédéfini de présence effective (par exemple 30 minutes). Il y aura donc un retard égal à ce délai entre l'arrivé de l'occupant et la modification du régime de fonctionnement du dispositif de chauffage 4 (ou de renouvellement d'air) mais ce délai est préférable pour garantir qu'il s'agit d'une vraie présence.

L'intérêt d'un algorithme *a posteriori* est donné par le fait qu'il est plus précis et il n'y a plus d'incertitudes sur l'état de présence/absence. Plus précisément, pour une analyse en temps réel, considérons qu'après une période de présence il y a une baisse du taux de $CO_2$ mesurée par le dispositif d'acquisition 5 dans la zone Z. Cette baisse peut être causée par une absence d'individu dans la zone Z, par une fausse mesure ou un courant d'air. Pour confirmer qu'il y a vraiment absence il faut attendre que le taux de $CO_2$ dans la zone baisse pendant une durée prédéfinie (par exemple 30 minutes). Au terme de cette durée prédéfinie, on considère qu'il y a réellement absence d'individu dans la zone. En faisant une analyse *a posteriori* on sait que le taux de $CO_2$ a commencé à baisser dans le passé et donc une plage d'absence va démarrer au moment où le taux de $CO_2$ a commencé à baisser.

Avec une analyse *a posteriori,* le dispositif d'estimation 6 construit un planning d'absence et de présence d'individu dans la zone sur une période donnée. Le planning prend typiquement la forme d'une succession de résultats, chaque résultat étant associé à un instant donné de la période. Chaque résultat peut par ailleurs présenter la forme d'un vecteur.

Une température de consigne Tcons (ou plusieurs) par plage de présence / absence / nuit / vacance est attribuée et utilisée par le dispositif de contrôle 8. Si l'instant t de la journée est dans une plage de présence, alors le dispositif de chauffage 4 va devoir respecter la température de consignéecorrespondante à cette plage. En parallèle, l'algorithme de détection de la présence en temps réel tourne pour garantir que le planning identifié est respecté. S'il ne l'est pas, la température de consigne Tcons va s'adapter à la nouvelle situation identifiée.

## 2. 1) Etape 1 - Détection initiale de détection présence / absence

Le dispositif d'estimation 6 génère dans une première étape un résultat associé à un instant t, prenant une première valeur pour indiquer une présence d'individu dans la zone Z à un instant donné (par exemple 1) et prenant une deuxième valeur (par exemple zéro) pour indiquer une absence d'individu dans la zone Z à un instant donné. Ce résultat peut donc prendre la forme d'un booléen.

Pour définir la valeur d'un résultat associé à un instant t, le dispositif d'estimation 6 met en œuvre au moins une des comparaisons suivantes, par exemple dans cet ordre :

- comparaison d'un bruit acoustique mesuré à l'instant t par le capteur de bruit avec un seuil de bruit (optionnelle) ;
- comparaison de la valeur d'une qualité d'air mesurée à l'instant t à l'intérieur de la zone avec un seuil de valeur prédéfini ;
- comparaison d'un taux d'accroissement de la qualité d'air à l'instant t avec un seuil d'accroissement. Le taux d'accroissement, ou « pente » dans la suite, peut typiquement être un écart entre la valeur mesurée à l'instant t et la valeur mesurée à l'instant précédent.

Par exemple, la donnée de qualité d'air utilisée pour les deux dernières comparaisons est un taux de $CO_2$ mesurée dans la zone Z. Dans ce cas, il est par exemple attribué au booléen associé à l'instant t la première valeur (indiquant une présence), lorsque les conditions suivantes sont satisfaites cumulativement :

- le bruit acoustique dans la zone Z mesuré à l'instant t est supérieur au seuil de bruit (par exemple 40 décibels) depuis 10 minutes ;
- le taux de $CO_2$ mesurée dans la zone Z à l'instant t est supérieur au seuil de qualité d'air (par exemple fixé à 450 ppm) depuis 10 minutes ;
- le taux d'accroissement en $CO_2$ est supérieur au seuil d'accroissement (par exemple fixé à zéro) depuis 10 minutes.

De préférence, chacune de ces conditions doit être satisfaite non seulement pour les données mesurées à l'instant t mais également sur des données mesurées précédemment, c'est-à-dire satisfaite sur une période de mesure prédéfinie, par exemple 10 minutes, pour positionner le résultat de l'instant t à la première valeur.

Sinon, le résultat à l'instant est positionné à la deuxième valeur (absence d'individu dans la zone Z).

Les étapes suivantes sont répétées dans le temps, de sorte à obtenir une séquence de résultats associés à des instants différents, chaque résultat ayant la première valeur (1) ou la deuxième valeur (0).

### 2.2) Etape 2 - Elimination de courtes périodes d'absences/présences

Dans une seconde étape, le dispositif d'estimation 6 modifie la séquence de résultats, de sorte que des périodes d'absence et des périodes de présence de courte durée soient supprimées.

Pour cela le dispositif d'estimation 6 identifie, dans la séquence de résultats une sous-séquence indicative d'une absence continue d'individu dans la zone sur une durée inférieure à un premier seuil temporel, entourée par deux sous-séquences connexes indicatives d'une présence continue d'individu dans la zone sur deux durées supérieures à un deuxième seuil temporel lui-même supérieur au premier seuil temporel. Le dispositif d'estimation 6 met ensuite les résultats de la sous-séquence identifiée en conformité avec les résultats des deux suites qui entourent la sous-séquence identifiée : les résultats de la sous séquence sont donc repositionnés à la première valeur (présence).

Symétriquement, le dispositif d'estimation 6 identifie, dans la séquence de résultats une sous-séquence indicative d'une présence continue d'individu dans la zone sur une durée inférieure au premier seuil temporel, entourée par deux sous-séquences connexes indicatives d'une absence continue d'individu dans la zone sur deux durées supérieures au deuxième seuil temporel. Le dispositif d'estimation 6 met ensuite les résultats de la sous-séquence identifiée en conformité avec les résultats des deux suites qui entourent la sous-séquence identifiée : les résultats de la sous séquence sont donc repositionnés à la deuxième valeur (absence).

Par exemple, le premier seuil temporel est de 30 minutes, et le deuxième seuil est de 2h.

### 2.3) Etape 3 - Elimination de périodes d'absences/présences prolongées

Dans une troisième étape, les mêmes étapes que celles de l'étape 2 peuvent être mises en œuvre également à l'aide d'une paire de seuils temporel de valeurs plus élevées que le premier seuil temporel et le deuxième seuil temporel (par exemple 60 minute et 24h).

### 2.4) Etape 4 - modifications additionnelles des résultats

D'éventuelles corrections additionnelles peuvent être apportées par le dispositif d'estimation 6 à la succession de résultats en sortie de l'étape 3 :

- Lorsque le taux de $CO_2$ dans la zone Z est inférieur à 500 ppm il est préférable le taux d'accroissement en $CO_2$ soit positif et supérieure à une valeur donnée, par exemple 20 ppm/10min, pour considérer cette période comme une éventuelle présence.
- Quand le taux de $CO_2$ est inférieur à 500 ppm les mesures de $CO_2$ sont plus sensibles. Il ainsi préférable s'assurer que la variation de $CO_2$ est vraiment due à une présence. Si le taux de de $CO_2$ est inférieur à 500 ppm, une légère montée ou descente ne veut pas forcément dire qu'il y a présence/absence mais il peut s'agir d'une influence extérieure. Donc si un résultat en sortie de l'étape 3 est égal à 1 et le taux de $CO_2$ est inférieur à 500 ppm mais la pente n'est pas supérieure à 20 ppm/10min, alors le résultat devient égal à 0 pendant cet intervalle.

### 2.5) Etape 5 - Elimination des périodes d'absence courtes

A partir des résultats issus de l'étape 4, on considère qu'il y a vraiment absence si cela est confirmé pour au moins 2 heures. On parcourt les résultats et on ne garde que les résultats à la deuxième valeur sur des périodes d'au moins 2h, et les états égaux à la première valeur. Le reste des valeurs sont éliminés. Le cas échéant, le dispositif d'estimation 6 met en œuvre des interpolations pour combler les trous ainsi formés par ces suppressions.

### 2.6) Etape 6 - Elimination éliminer les périodes de présence courtes

A partir des résultats issus de l'étape 4, on considère qu'il y a vraiment présence si cela est confirmé pour au moins 30 minutes. On parcourt les résultats et on ne garde que les résultats à la première valeur sur des périodes d'au moins 30 minutes, et les états égaux à la deuxième valeur. Le reste des valeurs sont éliminés. Le cas échéant, le dispositif d'estimation 6 met en œuvre des interpolations pour combler les trous ainsi formés par ces suppressions.

**2.7) Détection des vacances**

A partir des résultats de présence/absence obtenus, le dispositif d'estimation 6 calcule par ailleurs un état de vacances égal à 1 pendant les vacances et nul le reste du temps. Pour considérer qu'une période d'absence est en fait une période de vacances, il faut que la période d'absence soit supérieure à une journée.

**2.8) Plages nuit**

Le dispositif d'estimation 6 utilise par ailleurs des plages fixes pour la nuit. Ces plages commencent par exemple tous les soirs à 22h et finissent le lendemain à 7h. Il n'y a pas de plages « nuit » pendant les « vacances ». Une valeur de nuit est égale à 1 la nuit (hors les périodes de vacance) et à 0 sinon.

*Vecteur présence / nuit / absence / vacances*

Maintenant que l'on connait les plages de présence / nuit / absence / vacances on construit un vecteur qui contient toutes ces informations :

$$etat\_presence\_nuit\_absence\_vacance = \begin{cases} 1 \ si \ présence \\ 0 \ si \ absence(courte) \\ 2 \ si \ nuit \\ -1 \ si \ vacance \end{cases}.$$

**2.9) Détection présence/absence en temps réel**

L'algorithme de détection de présence/absence qui précède n'est pas toujours adapté à une détection de présence/absence en temps réel mais plutôt *a posteriori* après en avoir récolté au moins une journée de données.
Pour une détection de la présence en temps réel, on peut implémenter seulement les étapes 1-4 mentionnées précédemment. Il y aura donc un délai entre le moment effectif de début de présence et le moment où l'algorithme va identifier la présence.
S'il n'y a pas eu une longue absence (avant), l'identification d'une présence ne pourra pas se faire qu'après 30 minutes de présence effective (à cause de l'étape 2), et vice-versa en cas de présence longue, auquel cas il faut atteindre 30/60min pour déclarer une absence. En cas de plus longue absence (avant), il va falloir attendre 60 minutes avant de conclure qu'il y a présence.

**2.10) Apprentissage planning présence**

L'algorithme de détection de présence/absence (nuit) *a posteriori* est utilisé pour apprendre un planning de présence des occupants.
Pour cela, le dispositif d'estimation 6 analyse le vecteur de présence pour chaque jour de la semaine, demi-heure par demi-heure. On aura donc un vecteur de présence pour les lundis, mardis, mercredis ... Ce vecteur est actualisé au fur et à mesure que des nouvelles mesures seront faites par le dispositif d'acquisition 5. Il est mis à jour régulièrement. Par exemple ce vecteur est calculé sur une fenêtre de temps de 1 mois glissante.

- Pour la première semaine, le vecteur de planning présence sera donné par le vecteur *etat_presence_nuit_absence_vacance* calculé pour la semaine

- Au fur et à mesure qu'on récolte des nouvelles mesures, on calcule une densité (occurrence) de « 1 », « 0 », « -1 » et « 2 » pour chaque pas de temps et pour chaque jour de la semaine. Par ex : on collecte toutes les valeurs du vecteur *etat_presence_nuit_absence_vacance* de tous les mardis, et pour chaque pas de temps on regarde si on a plus de valeurs égales à 1, à 0, à -1 ou à 2. Si on a plus de valeurs égales à « 1 » alors on considère que tous les mardis pendant cette demi-heure on a présence. Sinon on retient la valeur la plus fréquente.

On obtient alors un vecteur planning_présence:

$$planning\_présence = \begin{cases} 1 \ si \ présence \\ 0 \ si \ absence(courte) \\ 2 \ si \ nuit \\ -1 \ si \ vacance \end{cases}$$

A ce planning il est attribué des températures de consigne Tcons par plage et le dispositif de chauffage 4 sera piloté pour respecter ces températures en fonction de la plage de présence / absence / nuit / vacance.

Ce planning peut différer d'une saison à l'autre. On peut donc avoir un planning de présence en été et un autre en hiver.

### 3) Phase de pilotage

#### 3. 1) Pilotage du dispositif de chauffage

Le dispositif de contrôle 8 pilote le dispositif de chauffage 4 en fonction de la présence des occupants, estimée par le dispositif d'estimation 6.

Quatre plages sont identifiées : une plage présence, une plage absence, une plage vacances, et une plage nuit. Si une absence longue est identifiée, cette période est considérée comme une période de vacances (car en général on demande une température encore plus basse en vacances qu'en absence).

Les occupants de la zone Z peuvent demander une température de chauffage différente pour chaque plage de présence/absence/vacance/nuit. S'ils souhaitent ils peuvent aussi ajouter des plages manuellement. Il peut également demander des températures différentes durant la même plage, par exemple il peut demander 22 ° C le matin en période de présence, et 21 °C le soir en période de présence. Le dispositif de chauffage 4 sera régulé pour satisfaire la température de consigne Tcons demandée par plage de présence/absence/vacance/nuit et par moment de la journée.

Le pilotage du dispositif de chauffage 4 par le dispositif de contrôle 8 peut être fait :

- en fonction d'une température de référence prise dans la pièce dans laquelle le capteur de température est situé (le régime de fonctionnement du dispositif de chauffage 4 va alors augmenter/baisser en fonction du delta entre une température demandée et la température mesurée dans une des pièces, peu importe la température dans les autre pièces) ;
- Individuellement pour chaque pièce de la zone Z si toutes les pièces sont dotées de capteurs de température, et d'un dispositif qui permet la régulation locale du chauffage par exemple des vannes thermostatiques.

Si l'occupant le souhaite, une anticipation/relance de chauffage est commandée par le dispositif de contrôle 8 pour assurer déjà la température demandée en présence quand l'occupant arrive dans la pièce.

Le système 1 peut également détecter une ouverture de fenêtre (toujours à l'aide du capteur de $CO_2$/COV/particules) ou un gros soutirage d'air. Dans ce cas, le dispositif de contrôle 8 désactive le dispositif de chauffage 4 ainsi que le dispositif de renouvellement d'air 2, afin de réaliser une économie d'énergie.

Si l'occupant donne son accord, le dispositif de contrôle 8 peut commander au dispositif de chauffage 4 de surchauffer certaines pièces si l'humidité mesurée par un capteur d'humidité est trop haute, surtout si on détecte que dans cette pièce un taux de renouvellement d'air est trop bas. A l'inverse, si l'humidité est trop basse (air sec) la température de consigne Tcons du dispositif de chauffage 4 peut être baissée par le dispositif de contrôle 8.

#### 3.1.2) Ouverture fenêtre

Comme indiqué précédemment, le dispositif d'acquisition 5 peut être utilisé pour détecter s'il y a une fenêtre qui vient d'être ouverte ou s'il y a un gros soutirage/renouvellement d'air dans la zone. Pour réaliser une telle détection, le dispositif d'estimation 6 ou le dispositif de contrôle 8 analyse de taux d'accroissement du taux de $CO_2$ mesuré (la température et l'humidité pouvant être également prises en compte pour confirmer l'événement ou en complément du $CO_2$ si le taux de $CO_2$ est bas). Si le taux de $CO_2$ baisse brutalement (une pente inférieure à -100 ppm/ 5 min) on peut déduire qu'un gros volume d'air quitte la pièce. Si en même temps il y a un changement de la température ou de l'humidité (et qui en plus converge vers les valeurs de la température et l'humidité extérieure) alors on considère qu'il y a un volume important d'air échangé avec l'extérieur.

Si le taux de $CO_2$ est bas (inférieur à 500 ppm), le changement de température et d'humidité peut suffire pour conclure qu'il y a un renouvellement d'air important.

Une fois le gros renouvellement d'air identifié le chauffage est arrêté par le dispositif de contrôle 8, par exemple si l'occupant avait préalablement donné son accord (par défaut le chauffage sera arrêté).

### 3.1.3) Surchauffe

Le dispositif de contrôle 8 peut commander une surchauffe de certaines pièces si l'humidité est trop haute (supérieure à 70%), surtout si on détecte que dans cette pièce le taux de renouvellement d'air est bas (inférieur à 35 m3/heure par logement). A l'inverse, si l'humidité est trop basse (air sec, humidité inférieure à 40%) la température de consigne Tcons du dispositif de chauffage 4 peut être baissée par le dispositif de contrôle 8.

Une surchauffe de la zone Z peut être envisagée si on veut baisser la consommation quand le tarif de l'électricité est plus élevé. En fonction du tarif de l'électricité et si on constate une présence courte durant le tarif haut, on peut baisser la température de consigne Tcons.

### 3.2) Pilotage du dispositif de renouvellement d'air

Le dispositif de contrôle 8 pilote le dispositif de renouvellement d'air 2 en fonction de l'estimation de présence/absence réalisée par le dispositif d'estimation 6. Le dispositif de contrôle 8 peut également prendre en compte à titre complémentaire : l'humidité, ou une baisse de la température intérieure mesurées par le dispositif d'acquisition 5.

Après un processus d'apprentissage, des courbes moyennes de CO2 et d'humidité sont calculées par le dispositif d'estimation 6 ou le dispositif de contrôle 8 pour chaque jour de la semaine, et le dispositif de contrôle commande le dispositif de renouvellement d'air de sorte que ce dernier anticipe et modifie son régime afin d'éviter un pic de pollution de l'air ou d'humidité sans gaspiller les calories du chauffage (la température est surveillée pour éviter une baisse de confort thermique).

Le dispositif de contrôle 8 favorise le plus possible une surventilation en absence des occupants si on estime que le taux de polluants ne va pas assez baisser avant la prochaine présence (sinon, en général, en absence on réduit/arrête le système de renouvellement d'air).

Si le taux de pollution de l'air extérieur est plus important que celui de l'air intérieur, alors le dispositif de contrôle 8 limite les échanges avec l'air extérieur (on réduit le taux de renouvellement d'air).

De manière non conventionnelle, le dispositif de contrôle commande une augmentation du régime de fonctionnement du dispositif de renouvellement d'air 2 si l'air dans une pièce est trop sec et celui extérieur est plus élevé.

En fonction de la courbe de pollution intérieure apprise le dispositif d'estimation 6 ou le dispositif de contrôle 8 calcule également le temps nécessaire d'ouverture de fenêtre matin, midi et soir afin de réduire le niveau de pollution à une valeur acceptable.

### 3.2.1) Régulation du renouvellement d'air

En résidentiel, les dispositifs de renouvellement d'air connus sont de quatre types :

- Amenée et évacuation naturelles,
- Amenée mécanique et évacuation naturelle,
- Amenée naturelle et évacuation mécanique (simple-flux),
- Amenée et évacuation mécaniques (double-flux).

La ventilation simple-flux est :

- AUTORÉGLABLE : Les débits sont extraits par des bouches dans les pièces techniques (cuisine, salle de bain, WC) et l'air neuf pénètre par les entrées d'air en pièces principales (séjour, chambres). Les débits sont maintenus constants automatiquement par des dispositifs autoréglables au niveau des terminaux
- HYGRORÉGLABLE : Les débits sont extraits par des bouches dans les pièces techniques (cuisine, salle de bain, WC) et l'air neuf pénètre par les entrées d'air en pièces principales (séjour, chambres). Les débits sont modulés automatiquement par des dispositifs hygroréglables au niveau des terminaux.

La ventilation double-flux est :

- STATIQUE : Les débits sont extraits par des bouches dans les pièces techniques (cuisine, salle de bain, WC) et l'air neuf est insufflé par des diffuseurs en pièces principales (séjour, chambres). La chaleur contenue dans l'air extrait est transférée à l'air neuf par le biais d'un échangeur à plaque

- THERMODYNAMIQUE : Les débits sont extraits par des bouches dans les pièces techniques (cuisine, salle de bain, WC) et l'air neuf est insufflé par des diffuseurs en pièces principales (séjour, chambres). Un échangeur thermodynamique permet d'exploiter l'énergie contenue dans l'air extrait pour rafraîchir ou préchauffer le logement.

De préférence, le dispositif de renouvellement d'air est à débit variable (bouches d'extraction et éventuellement les bouches d'entré d'air neuf). Ce débit varie en fonction de l'humidité relative.

Voici le principe d'ouverture (ou vitesse ventilation) des bouches d'évacuation (et d'entrée d'air) du dispositif de renouvellement d'air 2 utilisé dans le système 1 :

- Les bouches s'ouvrent (ou la vitesse de ventilation varie) en fonction du

    o taux d'humidité. Par exemple si l'humidité dépasse un seuil Hmin_haut et éventuellement l'humidité extérieure est plus basse que l'humidité intérieure, le débit Q est augmenté par le dispositif de contrôle 8 de manière proportionnelle ou via un PID en fonction de l'évolution de l'humidité. A l'inverse, si l'humidité est inférieure à un seuil Hmin_bas (air sec) et l'humidité extérieure est plus importante que l'humidité intérieure, le débit Q va augmenter de manière inversement-proportionnelle ou via un PID en fonction de l'évolution de l'humidité.

    ◦ et du delta entre le CO2/COV/particules intérieur et extérieur. Si l'air intérieur est plus pollué que l'air extérieur, alors le débit de renouvellement d'air est augmenté par le dispositif de contrôle 8 de façon de diminuer le delta entre l'air extérieur et l'air intérieur. Sinon, le régime de renouvellement d'air va baisser. Le régime retenu est le maximum entre celui calculé en fonction de l'humidité et celui calculé en fonction du CO2. Si par exemple en fonction de l'humidité on estime une ouverture de 50% et en fonction du CO2 on estime une ouverture de 70%, alors l'ouverture retenue est de 70% (max(50%,70%)).

- Les bouches se ferment en fonction de l'évolution de la température intérieure (si la température intérieure baisse en-dessous un seuil, les bouches se ferment).

La régulation ne tient pas compte seulement de l'humidité ou de la pollution de la pièce dans laquelle les bouches d'extraction sont placées (en général dans les pièces dites humides comme la cuisine et la salle de bains) mais de l'humidité et de la pollution de toutes les pièces. Par exemple, le dispositif de contrôle peut commander une augmentation du régime de renouvellement d'air si dans le salon on mesure un grand taux de CO2, même si dans la cuisine ou dans la salle de bains, le CO2 et l'humidité sont « normales ».

En cas d'humidité trop basse, le dispositif de contrôle 8 peut également augmenter le taux de renouvellement d'air (avec l'extérieur) si l'humidité extérieure est plus élevée que celle intérieure.

La régulation décrite ci-dessus s'applique en général en présence des occupants. Le régime du renouvellement d'air est en général diminué voire arrêté en absence des occupants, sauf si on sait que celui ne va pas assez descendre avant le retour des occupants. Dans ce cas on favorise une ventilation avant qu'on commence à chauffer pour anticiper le chauffage. Donc, en complément de l'humidité et du CO2, le renouvellement d'air est aussi piloté en fonction du planning de présence des occupants. Comme pour le chauffage, si la détection de la présence en temps réel voit une dérive du planning de présence, alors le régime de fonctionnement du système de renouvellement d'air s'adapte à la nouvelle situation.

*3.2.2) Profil CO2 et humidité*

De préférence, le dispositif d'estimation 6 ou le dispositif de contrôle 8 construit une courbe moyenne de CO2 (COV, particules) et une courbe moyenne d'humidité pour chaque jour de la semaine. Par exemple, pour avoir le taux de CO2 moyen à 11h les mercredis alors il est fait la moyenne des taux de CO2 de tous les mercredis à 11h. Le même calcul est fait pour l'humidité. On peut par exemple calculer ce vecteur sur une fenêtre de temps de 1 mois glissante (1 mois de données pour faire la moyenne c'est à dire 4 mercredis c'est-à-dire qu'une valeur de la courbe moyenne sera obtenue en moyennant 4 valeurs). La courbe moyenne de CO2 et d'humidité va différer d'une saison à l'autre.

Pour chaque courbe identifiée le dispositif d'estimation 6 ou le dispositif de contrôle 8 calcule un dégrée de confiance (ce degré de confiance peut être calculé aussi pour le planning de chauffage). Pour cela, on calcule le delta entre la courbe moyenne calculé et les courbes de CO2 ou humidité mesurées. Plus ce delta est faible, plus la courbe est fiable. S'il y a peu de différence entre les courbes calculées pour chaque jour de la semaine, respectivement du weekend, alors on peut calculer une seule courbe moyenne en semaine, respectivement en weekend (et non une courbe par jour de la semaine).

En fonction du profil de ces deux courbes, on peut augmenter le régime de renouvellement d'air pour éviter les pics de CO2 (COV) ou d'humidité.

Sur la base de la courbe de CO2 ou humidité, le dispositif de contrôle peut décider d'augmenter le régime de fonctionnement du système de renouvellement d'air avant que le seuil déclencheur soit atteint, si on sait qu'il aura un pic important. De cette façon on « tasse » la valeur du pic. Si par exemple le système de renouvellement d'air 2 se met en route une fois que le seuil de 700ppm a été atteint et si on sait que dans 2h on va atteindre un niveau important de CO2, alors on peut commencer à ventiler dès que 600ppm ont été atteints pour tasser ce maximum.

A l'inverse, pour des bâtiments diagnostiqués comme humides, le dispositif de contrôle peut décider, en cas d'absence d'occupants, de garder un régime de renouvellement d'air modéré si le taux d'humidité est toujours haut et/ou si l'humidité extérieure mesurée est inférieure à l'humidité intérieure mesurée, pour favoriser l'assèchement du bâtiment.

*3.2.3) Estimation de la durée d'ouverture d'une fenêtre*

A chaque instant le système 1 peut calculer le temps nécessaire d'ouverture de fenêtre pour que le taux de CO2 descende en dessous un certain seuil (par ex. 600ppm).

Pour calculer la durée optimale d'ouverture de fenêtre il faut connaitre la pente de dissipation de CO2. Le système 1 regarde donc toutes les pentes mesurées inférieures à -100 ppm/5 minutes et considère que ces pentes correspondent à une ouverture de fenêtre. Le système 1 calcule la densité de ces pentes et prend le maximum de cette densité comme étant la pente de dissipation de CO2 en ouvrant la fenêtre pendant 5 minutes. Le système 1 divise le taux de CO2 correspondant au pic (moyenne) à cette pente pour identifier le temps d'ouverture de fenêtre.

En fonction de la courbe moyenne de CO2 le système peut estimer un temps moyen d'ouverture de fenêtre matin, midi et soir en fonction du taux maximal pendant cet intervalle de temps.

L'utilisateur a la possibilité de choisir via une application les différents seuils et les différents modes de fonctionnement.

**Revendications**

1. Système comprenant :

   • un dispositif de renouvellement d'air (2) d'une zone (Z),
   • un dispositif de chauffage (4) de la zone (Z),
   • un dispositif d'estimation de présence (6) configuré pour estimer si un individu est présent ou non dans la zone (Z) de manière répétée, de sorte à obtenir une séquence de résultats associée à des instants successifs, chaque résultat indiquant si un individu est présent ou absent dans la zone à l'instant associé,
   • un dispositif de contrôle (8) configuré pour:

     ◦ identifier dans la séquence : a) une sous-séquence indicative d'une absence continue d'individu dans la zone sur une durée inférieure à un premier seuil temporel, entourée par deux sous-séquences connexes indicatives d'une présence continue d'individu dans la zone sur deux durées supérieures à un deuxième seuil, le deuxième seuil temporel étant supérieur ou égal au premier seuil temporel, et/ou b) une sous-séquence indicative d'une présence continue d'individu dans la zone sur une durée inférieure à un premier seuil temporel, entourée par deux sous-séquences indicatives d'une absence continue d'individu dans la zone sur deux durées supérieures à un deuxième seuil temporel, le deuxième seuil temporel étant supérieur ou égal au premier seuil temporel,
     ◦ mettre des résultats d'au moins une sous-séquence identifiée lors de l'étape d'identification en conformité avec les résultats des deux sous-séquences connexes qui entourent la sous-séquence identifiée, de sorte à obtenir une séquence de résultats modifiée,
     ◦ piloter le dispositif de renouvellement d'air (2) et le dispositif de chauffage (4) en fonction de la séquence de résultats modifiée.

2. Système selon la revendication précédente, comprenant par ailleurs un capteur de qualité d'air configuré pour mesurer une qualité d'air dans la zone, et dans lequel le dispositif d'estimation de présence (6) est configuré pour estimer si un individu est présent ou non dans la zone en fonction de la qualité d'air mesurée.

3. Système selon la revendication précédente, dans lequel l'estimation comprend les étapes suivantes mises en œuvre pour un instant de référence :

   - comparaison entre la valeur d'une qualité d'air mesurée par le capteur à l'instant de référence et un seuil de valeur, et/ou comparaison entre un taux d'accroissement de la qualité d'air mesurée par le capteur à l'instant de référence et un seuil d'accroissement,
   - génération d'un résultat associé à l'instant de référence, indiquant si un individu est présent ou absent dans la zone à l'instant de référence en fonction de chaque comparaison mise en œuvre.

**4.** Système selon la revendication précédente, le dispositif de contrôle est configuré pour :

- activer le dispositif de chauffage (4) ou augmenter un régime de chauffage du dispositif de chauffage (4), à condition : que chaque qualité d'air mesurée au cours d'une période de durée prédéfinie ait une valeur supérieure au seuil de valeur, et/ou que chaque taux d'accroissement comparé au cours de ladite période soit supérieur au seuil de valeur, et/ou
- désactiver le dispositif de chauffage ou réduire le régime de chauffage du dispositif de chauffage (4), à condition : que chaque qualité d'air mesurée au cours d'une période de durée prédéfinie ait une valeur inférieure au seuil de valeur, et/ou que chaque taux d'accroissement comparé au cours de ladite période soit inférieure au seuil de valeur.

**5.** Système selon la revendication précédente, dans lequel le capteur de qualité d'air est configuré pour mesurer un taux de $CO_2$, en COV, en particules PM 2.5 et/ou en particules PM 10.

**6.** Système selon l'une des revendications précédentes, dans lequel :

- le dispositif d'estimation de présence (6) est configuré pour générer un planning de présence et d'absence d'individu dans la zone sur une période de temps, sur la base de la séquence modifiée,
- le dispositif de contrôle (8) est configuré pour piloter le dispositif de renouvellement d'air (2) et le dispositif de chauffage (4) en fonction du planning généré.

**7.** Système selon l'une des revendications précédentes, comprenant par ailleurs un capteur d'humidité configuré pour mesurer une humidité, et dans lequel le dispositif de contrôle (8) est configuré pour piloter le dispositif de renouvellement d'air (2) en fonction de l'humidité mesurée.

**8.** Système selon l'une des revendications précédentes, comprenant par ailleurs un capteur de qualité d'air interne configuré pour mesurer une qualité d'air dans la zone, un capteur de qualité d'air externe configuré pour mesurer une qualité d'air à l'extérieur de la zone, et dans lequel le dispositif de contrôle est configuré pour piloter le dispositif de renouvellement d'air (2) en fonction d'un écart entre les qualités d'air respectivement mesurées par les capteurs de qualité d'air interne et externe.

**9.** Procédé comprenant :

- estimer si un individu est présent ou non dans une zone, de sorte à obtenir une séquence de résultats associée à des instants successifs, chaque résultat indiquant si un individu est présent ou absent dans la zone à l'instant associé,
- identifier dans la séquence : a) une sous-séquence indicative d'une absence continue d'individu dans la zone sur une durée inférieure à un premier seuil temporel, entourée par deux sous-séquences connexes indicatives d'une présence continue d'individu dans la zone sur deux durées supérieures à un deuxième seuil, le deuxième seuil temporel étant supérieur ou égal au premier seuil temporel, et/ou b) une sous-séquence indicative d'une présence continue d'individu dans la zone sur une durée inférieure à un premier seuil temporel, entourée par deux sous-séquences indicatives d'une absence continue d'individu dans la zone sur deux durées supérieures à un deuxième seuil temporel, le deuxième seuil temporel étant supérieur ou égal au premier seuil temporel,
- mettre des résultats d'au moins une sous-séquence identifiée lors de l'étape d'identification en conformité avec les résultats des deux sous-séquences connexes qui entourent la sous-séquence identifiée, de sorte à obtenir une séquence de résultats modifiée,
- piloter un dispositif de renouvellement d'air (2) de la zone (Z) et un dispositif de chauffage (4) de la zone (Z) en fonction de la séquence de résultats modifiée.

**Patentansprüche**

**1.** System, das umfasst:

- eine Lufterneuerungsvorrichtung (2) einer Zone (Z),
- eine Heizvorrichtung (4) der Zone (Z),
- eine Anwesenheitsschätzungsvorrichtung (6), die dazu ausgestaltet ist, zu schätzen, ob eine Person wiederholt in der Zone (Z) anwesend ist oder nicht, derart dass eine Folge von Ergebnissen erhalten wird, die mit aufeinanderfolgenden Zeitpunkten verknüpft ist, wobei jedes Ergebnis angibt, ob eine Person an dem verknüpften Zeitpunkt in der Zone anwesend oder abwesend ist,
• eine Steuervorrichtung (8), die ausgestaltet ist zum:

  ◦ Identifizieren, in der Folge: a) einer Unterfolge, die eine andauernde Abwesenheit einer Person in der Zone während einer Dauer angibt, die kürzer als ein erster zeitlicher Schwellenwert ist, umgeben von zwei verbundenen Unterfolgen, die eine andauernde Anwesenheit einer Person in der Zone während zwei Dauern angeben, die länger als ein zweiter Schwellenwert sind, wobei der zweite zeitliche Schwellenwert größer oder gleich dem ersten zeitlichen Schwellenwert ist, und/oder b) einer Unterfolge, die eine andauernde Anwesenheit einer Person in der Zone während einer Dauer angibt, die kürzer als ein erster zeitlicher Schwellenwert ist, umgeben von zwei Unterfolgen, die eine andauernde Abwesenheit einer Person in der Zone während zwei Dauern angibt, die länger als ein zweiter zeitlicher Schwellenwert sind, wobei der zweite zeitliche Schwellenwert größer oder gleich dem ersten zeitlichen Schwellenwert ist,
  ◦ in Übereinstimmung bringen der Ergebnisse von mindestens einer während des Schritts des Identifizierens identifizierten Unterfolge mit den Ergebnissen der zwei verbundenen Unterfolgen, die die identifizierte Unterfolge umgeben, derart dass eine geänderte Folge von Ergebnissen erhalten wird,
  ◦ Steuern der Lufterneuerungsvorrichtung (2) und der Heizvorrichtung (4) in Abhängigkeit von der geänderten Folge von Ergebnissen.

2. System nach dem vorhergehenden Anspruch, das ferner einen Luftqualitätssensor umfasst, der dazu ausgestaltet ist, eine Luftqualität in der Zone zu messen, und wobei die Anwesenheitsschätzungsvorrichtung (6) dazu ausgestaltet ist, in Abhängigkeit von der gemessenen Luftqualität zu schätzen, ob eine Person in der Zone anwesend ist oder nicht.

3. System nach dem vorhergehenden Anspruch, wobei die Schätzung die folgenden Schritte umfasst, die für einen Bezugszeitpunkt durchgeführt werden:

  - Vergleichen des Werts einer durch den Sensor am Bezugszeitpunkt gemessenen Luftqualität und eines Schwellenwerts für den Wert und/oder Vergleichen einer Erhöhungsrate der durch den Sensor am Bezugszeitpunkt gemessenen Luftqualität und eines Erhöhungsschwellenwerts,
  - Erzeugen eines Ergebnisses, das mit dem Bezugszeitpunkt verknüpft ist und in Abhängigkeit von jedem durchgeführten Vergleich angibt, ob eine Person am Bezugszeitpunkt in der Zone anwesend oder abwesend ist.

4. System nach dem vorhergehenden Anspruch, wobei die Steuervorrichtung ausgestaltet ist zum:

  • Aktivieren der Heizvorrichtung (4) oder Erhöhen eines Heizbetriebs der Heizvorrichtung (4) unter der Bedingung: dass jede im Laufe einer Periode mit einer vordefinierten Dauer gemessene Luftqualität einen Wert aufweist, der höher als der Schwellenwert des Werts ist, und/oder dass jede im Laufe der Periode verglichene Erhöhungsrate größer als der Schwellenwert des Werts ist, und/oder
  • Deaktivieren der Heizvorrichtung oder Senken des Heizbetriebs der Heizvorrichtung (4) unter der Bedingung: dass jede im Laufe einer Periode mit einer vordefinierten Dauer gemessene Luftqualität einen Wert aufweist, der niedriger als der Schwellenwert des Werts ist, und/oder dass jede im Laufe der Periode verglichene Erhöhungsrate niedriger als der Schwellenwert des Werts ist.

5. System nach dem vorhergehenden Anspruch, wobei der Luftqualitätssensor dazu ausgestaltet ist, einen $CO_2$-, COV-, PM2,5-Partikel und/oder PM10-Partikel-Anteil zu messen.

6. System nach einem der vorhergehenden Ansprüche, wobei:

  • die Anwesenheitsschätzungsvorrichtung (6) dazu ausgestaltet ist, auf der Grundlage der geänderten Folge eine Planung der Anwesenheit und der Abwesenheit einer Person in der Zone während eines Zeitraums zu erzeugen,
  • die Steuervorrichtung (8) dazu ausgestaltet ist, die Lufterneuerungsvorrichtung (2) und die Heizvorrichtung (4) in Abhängigkeit von der erzeugten Planung zu steuern.

7. System nach einem der vorhergehenden Ansprüche, das ferner einen Feuchtigkeitssensor umfasst, der dazu ausgestaltet ist, eine Feuchtigkeit zu messen, und wobei die Steuervorrichtung (8) dazu ausgestaltet ist, die Lufterneuerungsvorrichtung (2) in Abhängigkeit von der gemessenen Feuchtigkeit zu steuern.

**8.** System nach einem der vorhergehenden Ansprüche, das ferner einen internen Luftqualitätssensor, der dazu ausgestaltet ist, eine Luftqualität in der Zone zu messen, und einen externen Luftqualitätssensor umfasst, der dazu ausgestaltet ist, eine Luftqualität außerhalb der Zone zu messen, und wobei die Steuervorrichtung dazu ausgestaltet ist, die Lufterneuerungsvorrichtung (2) in Abhängigkeit von einem Abstand zwischen den jeweils durch den internen und den externen Luftqualitätssensor gemessenen Luftqualitäten zu steuern.

**9.** Verfahren, das umfasst:

• Schätzen, ob eine Person in einer Zone anwesend ist oder nicht, derart dass eine Folge von Ergebnissen erhalten wird, die mit aufeinanderfolgenden Zeitpunkten verknüpft ist, wobei jedes Ergebnis angibt, ob eine Person an dem verknüpften Zeitpunkt in der Zone anwesend oder abwesend ist,
• Identifizieren, in der Folge: a) einer Unterfolge, die eine andauernde Abwesenheit einer Person in der Zone während einer Dauer angibt, die kürzer als ein erster zeitlicher Schwellenwert ist, umgeben von zwei verbundenen Unterfolgen, die eine andauernde Anwesenheit einer Person in der Zone während zwei Dauern angeben, die länger als ein zweiter Schwellenwert sind, wobei der zweite zeitliche Schwellenwert größer oder gleich dem ersten zeitlichen Schwellenwert ist, und/oder b) einer Unterfolge, die eine andauernde Anwesenheit einer Person in der Zone während einer Dauer angibt, die kürzer als ein erster zeitlicher Schwellenwert ist, umgeben von zwei Unterfolgen, die eine andauernde Abwesenheit einer Person in der Zone während zwei Dauern angibt, die länger als ein zweiter zeitlicher Schwellenwert sind, wobei der zweite zeitliche Schwellenwert größer oder gleich dem ersten zeitlichen Schwellenwert ist,
• in Übereinstimmung bringen der Ergebnisse von mindestens einer während des Schritts des Identifizierens identifizierten Unterfolge mit den Ergebnissen der zwei verbundenen Unterfolgen, die die identifizierte Unterfolge umgeben, derart dass eine geänderte Folge von Ergebnissen erhalten wird,
• Steuern einer Lufterneuerungsvorrichtung (2) der Zone (Z) und einer Heizvorrichtung (4) der Zone (Z) in Abhängigkeit von der geänderten Folge von Ergebnissen.

**Claims**

**1.** System comprising

• an air exchange device (2) for a zone (Z),
• a heating device (4) for the area (Z),
• a presence estimation device (6) configured to estimate whether or not an individual is present in the area (Z) repeatedly, so as to obtain a sequence of results associated with successive times, each result indicating whether an individual is present or absent in the area at the associated time,
• a control device (8) configured to:

○ identify in the sequence : (a) a subsequence indicative of a continuous absence of an individual in the area over a duration less than a first temporal threshold, surrounded by two related subsequences indicative of a continuous presence of an individual in the area over two durations greater than a second threshold, the second temporal threshold being greater than or equal to the first temporal threshold, and/or b) a subsequence indicative of a continuous presence of an individual in the area over a duration less than a first temporal threshold, surrounded by two subsequences indicative of a continuous absence of an individual in the area over two durations greater than a second temporal threshold, the second temporal threshold being greater than or equal to the first temporal threshold,
○ matching the results of at least one subsequence identified in the identification step with the results of the two related subsequences surrounding the identified subsequence, so as to obtain a modified sequence of results,
○ control the air exchange device (2) and the heating device (4) according to the changed result sequence.

**2.** The system according to the preceding claim, further comprising an air quality sensor configured to measure an air quality in the area, and wherein the presence estimator (6) is configured to estimate whether or not an individual is present in the area based on the measured air quality.

**3.** The system according to the preceding claim, wherein the estimation comprises the following steps implemented for a reference time:

- comparing the value of an air quality measured by the sensor at the reference time with a value threshold, and/or comparing a rate of increase of the air quality measured by the sensor at the reference time with an increase threshold,
- generating a result associated with the reference time, indicating whether an individual is present or absent in the area at the reference time according to each implemented comparison.

4. The system according to the preceding claim, the control device is configured to:

• activating the heating device (4) or increasing a heating regime of the heating device (4), provided that: each air quality measured over a predefined period of time has a value greater than the threshold value, and/or each rate of increase compared over said period is greater than the threshold value, and/or
• deactivating the heater or reducing the heating rate of the heater (4), provided that: each air quality measured during a period of predefined duration has a value below the threshold value, and/or each rate of increase compared during said period is below the threshold value.

5. The system according to the preceding claim, wherein the air quality sensor is configured to measure a level of $CO_2$, VOCs, PM 2.5 particles and/or PM 10 particles.

6. The system according to any of the preceding claims, wherein:

• the presence estimation device (6) is configured to generate a schedule of presence and absence of individuals in the area over a period of time, based on the modified sequence,
• the control device (8) is configured to control the air exchange device (2) and the heating device (4) according to the generated schedule.

7. The system according to any of the preceding claims, further comprising a humidity sensor configured to measure a humidity, and wherein the control device (8) is configured to drive the air renewal device (2) in dependence on the measured humidity.

8. The system according to any of the preceding claims, further comprising an internal air quality sensor configured to measure an air quality in the area, an external air quality sensor configured to measure an air quality outside the area, and wherein the control device is configured to drive the air renewal device (2) in dependence on a deviation between the air qualities respectively measured by the internal and external air quality sensors.

9. A method comprising :

• estimating whether or not an individual is present in a zone, so as to obtain a sequence of results associated with successive times, each result indicating whether an individual is present or absent in the zone at the associated time,
• identifying in the sequence : (a) a subsequence indicative of a continuous absence of an individual in the area over a duration less than a first temporal threshold, surrounded by two related subsequences indicative of a continuous presence of an individual in the area over two durations greater than a second threshold, the second temporal threshold being greater than or equal to the first temporal threshold, and/or b) a subsequence indicative of a continuous presence of an individual in the area over a duration less than a first temporal threshold, surrounded by two subsequences indicative of a continuous absence of an individual in the area over two durations greater than a second temporal threshold, the second temporal threshold being greater than or equal to the first temporal threshold,
• matching the results of at least one subsequence identified in the identification step with the results of the two related subsequences surrounding the identified subsequence, so as to obtain a modified sequence of results,
• controlling an air exchange device (2) of the zone (Z) and a heating device (4) of the zone (Z) according to the modified result sequence.

FIG. 1

FIG. 2

17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013107461 A1

- EP 3483516 A1